# EUROPÄISCHE PATENTSCHRIFT

(11) **EP 1 482 145 B1**
(45) Veröffentlichungstag und Bekanntmachung des Hinweises auf die Patenterteilung: **24.03.2010**
(21) Anmeldenummer: 04010922.5
(22) Anmeldetag: 07.05.2004
(51) Int. Cl.: F02B 23/06, F02B 23/08

(54) **Verfahren sowie Kolben-Zylindereinheit zum Erzeugen eines brennfähigen Kraftstoff-Gasgemisches in einem Brennraum einer Hubkolbenbrennkraftmaschine**
Method and piston-cylinder unit to produce an inflammable mixture in the combustion chamber of a reciprocating combustion engine
Méthode et unité de piston-cylindre pour produire un mélange inflammable dans une chambre de combustion d'un moteur à combustion interne

(30) Priorität: 21.05.2003 DE 10323000
(43) Veröffentlichungstag der Anmeldung: 01.12.2004
(73) Patentinhaber: META MOTOREN- UND ENERGIE-TECHNIK GMBH, D-52134 Herzogenrath (DE)
(72) Erfinder: Kreuter, Peter, Dr.-Ing., 52072 Aachen (DE); Fettes, Christian, Dr.-Ing., 52062 Aachen (DE)
(74) Vertreter: Kramer - Barske - Schmidtchen

(56) Entgegenhaltungen:
- EP-A- 0 727 571
- CH-A- 175 433
- DE-A1- 3 805 009
- DE-A1- 19 823 004
- DE-A1- 19 926 132
- US-A- 4 509 474
- PATENT ABSTRACTS OF JAPAN Bd. 005, Nr. 151 (M-089), 24. September 1981 (1981-09-24) & JP 56 081218 A (ISHIKAWAJIMA HARIMA HEAVY IND CO LTD), 3. Juli 1981 (1981-07-03)
- PATENT ABSTRACTS OF JAPAN Bd. 014, Nr. 395 (M-1016), 27. August 1990 (1990-08-27) & JP 02 149719 A (NISSAN MOTOR CO LTD), 8. Juni 1990 (1990-06-08)

## Beschreibung

Die Erfindung betrifft ein Verfahren zum Erzeugen eines brennfähigen Kraftstoff-Gasgemisches in einem Brennraum einer Hubkolbenbrennkraftmaschine. Die Erfindung betrifft weiter eine Kolben-Zylindereinheit zum Durchführen des Verfahrens.

Für eine einwandfreie Verbrennung der brennfähigen Ladung im Brennraum einer Hubkolbenbrennkraftmaschine ist die Homogenisierung des Gemisches, d.h. eine möglichst gleichmäßige und feine Verteilung des flüssigen oder gasförmigen Kraftstoffes in der Luft bzw. dem Gas des Brennraums, von ausschlaggebender Bedeutung. Die Homogenisierung wird nicht nur durch eine möglichst feine Kraftstoffverteilung, beispielsweise unmittelbar durch Zerstäuben des Kraftstoffes in einer Einspritzdüse, vorteilhaft beeinflusst, sondern auch durch die Bewegung der Ladung im Brennraum, insbesondere vor deren Zündung.

Es gibt zahlreiche Vorschläge, diese Ladungsbewegung vorteilhaft zu beeinflussen, wie beispielsweise die Ausbildung eines oder mehrerer Einlasskanäle derart, dass im Brennraum eine Drallströmung oder Tumbleströmung erzeugt wird, die Gestaltung der Innenwand des Brennraums in deren Zusammenwirken mit dem Kolben derart, dass bei der Bewegung des Kolbens in Richtung seines oberen Totpunktes Wirbel erzeugt werden und so weiter.

Der Erfindung liegt die Aufgabe zugrunde, die Gemischaufbereitung in einer Hubkolbenbrennkraftmaschine weiter zu verbessern.

Aus der CH 175 433 A, von der im Oberbegriff des Anspruchs 1 ausgegangen wird, ist eine Hubkolbenbrennkraftmaschine bekannt, deren Einlasskanal tangential in den äußeren Bereich des Zylinderkopfes mündet, so dass beim Ansaughub in dem Raum zwischen dem Zylinder und dem Kolben eine in Umfangsrichtung gerichtete Drallströmung entsteht. Diese Drallströmung wird beim Aufwärtshub des Kolbens zunehmend gequetscht, wobei sie infolge von Reibung an den Zylinderwänden und der Kolbenoberseite Rotationsenergie verliert und durch die Quetschung des Bereiches zwischen der Kolbenoberseite und dem Zylinderkopf eine radiale Komponente enthält, mit der sie in die ω-förmige Brennraummulde des Kolbens einströmt, so dass in der Brennraummulde des Kolbens eine Torusströmung entstehen soll. Eine Eigenart dieser Brennkraftmaschine liegt darin, dass die Umlaufgeschwindigkeit der Drallströmung infolge des relativ langen Zeitraums zwischen der Einströmung der Frischladung durch das offene Einlassventil und dem Einspritzzeitpunkt gering ist, wodurch die Gemischaufbereitung negativ beeinflusst wird.

Aus der DE 38 05 009 A1 ist ein Kolben für Dieselmotoren bekannt, in dessen eine Quetschfläche bildender Oberseite radial außerhalb der Brennraummulde vom Umfang der Brennraummulde ausgehende, radial auswärts und in Umfangsrichtung gerichtete, insgesamt sichelförmige Ausnehmungen ausgebildet sind, deren Querschnittsfläche in ihrer Längsrichtung mit zunehmender Entfernung vom Brennraum abnimmt. Die vom Brennraum abgewandte Begrenzungslinie einer sichelförmigen Ausnehmung, die zunächst mit tangentialer Komponente von der Brennraumwand ausgeht, ist derart ausgebildet, dass ihr radialer Abstand vom Brennraum zunimmt. Mit der Ausbildung des Kolbens soll erreicht werden, dass die Quetschströmung in den Ausnehmungen konzentriert wird und mit tangentialer Komponente in den Brennraum einströmt, so dass innerhalb des Brennraums eine in Umfangsrichtung gerichtete Wirbelströmung entsteht, mit der das "Nageln" von Dieselmotoren vermindert werden soll.

Die DE 198 23 004 A1 beschreibt einen Kolben mit einem muldenförmig ausgebildeten zentralen Brennraum und in der Oberseite des Kolbens ausgebildeten Kanälen, die tangential in die Kolbenmulde münden. Jeder Kanal ist an seinem der Kolbenmulde zugewandten Ende derart ausgebildet, dass die von ihm erzeugte Strömung auf einen Auftreffpunkt eines Einspritzstrahls in der Kolbenmulde gerichtet ist, und ist weiter so ausgebildet, dass der Querschnitt senkrecht zur im Kanal herrschenden Strömungsrichtung zur Kolbenmulde hin abnimmt.

Die DE 199 26 132 A1 beschreibt einen Dieselmotor mit einem dachförmigen Brennraum, wobei zwei Dachflächen zueinander geneigt sind und in einer Dachfläche wenigstens ein Gaseinlassventil und in der anderen Dachfläche wenigstens ein Gasauslassventil angeordnet ist. Der Kolben weist einen Muldenbrennraum auf, außerhalb dessen seine Oberseite mit den Dachflächen entsprechenden Quetschflächen ausgebildet ist. Durch diese Ausbildung bildet die in den Brennraum während des Saughubs einströmende Luft eine Tumbleströmung, die bei einer Aufwärtsbewegung des Kolbens zusammengedrückt wird und aus der mittels vom Umfang des Brennraums ausgehender, insgesamt sichelförmiger Ausnehnungen ein Teil "abgeschält" wird, der als Tangentialströmung um die Zylinderachse rotierend in die Brennraummulde als Drallströmung einströmt. Dieser Drallströmung fehlt eine zur Umfangsrichtung der Strömung insgesamt senkrecht gerichtete Walzenkomponente, aufgrund derer eine stabile Torusströmung entsteht. Die Walzenkomponente fehlt der Strömung deshalb, weil zumindest in einem wesentlichen Teil der Länge der Ausnehmungen die Quetschfläche radial außerhalb der Ausnehmungen nicht oder nur kaum größer ist als radial innerhalb der Ausnehmung, so dass in der Ausnehmung keine Umlaufströmung zustande kommt. Das Zustandekommen einer solchen Umlaufströmung wird zusätzlich dadurch erschwert, dass während der Wirkung der Quetschflächen die Tumbleströmung zerstört wird.

Die EP-A-0 727 571 beschreibt einen Kolben mit einer flachen Brennraummulde und von der Kolbenumfangsseite seitlich in die Brennraummulde verlaufenden, tangential gerichteten Kanälen. Wenn sich der Kolben zu seinem oberen Totpunkt bewegt, strömt durch diese Kanäle eine Ladungsströmung mit einer Komponente in Umfangsrichtung, die sich der radial gerichteten Quetschströmung überlagert.

Die US-A-4 509 474 beschreibt eine Doppelkolbenbrennkraftmaschine mit einem im Zylinderkopf zwischen den Kolben ausgebildeten Brennraum, in den tangential von den Bereichen über den Kolben ausgebildete Kanäle einmünden.

JP 56 081218 A beschreibt einen Kolben mit zentraler Brennraummulde und von der eine Quetschfläche bildenden Kolbenoberseite ausgehenden, durch den Kolben hindurch führenden und mit tangentialer Komponente in die Brennraummulde mündenden Kanälen.

JP 02 149719 A beschreibt eine Kolben-Zylindereinheit, deren Zylinderkopf einen Ansatz aufweist, der in eine Öffnung der im Kolben ausgebildeten Brennkammer einragt. In der Oberseite des Kolbens ist ein von der Kolbenkammer getrennter ausgesparter Raum ausgebildet. Während der ersten Hälfte einer Verbrennung, wenn der Vorsprung in die Öffnung einragt und die Brennkammer von dem ausgesparten Raum getrennt ist, wird ein hohes Kraftstoff-Luftverhältnis aufrecht erhalten. Während der zweiten Hälfte der Verbrennung wird die nicht verwendete Luft in dem ausgenommenen Raum zusätzlich verwendet, um die Entstehung von Stickoxiden zu unterdrücken.

Der Erfindung liegt die Aufgabe zugrunde, die Gemischaufbereitung in einer Hubkolbenmaschine weiter zu verbessern.

Eine erste Lösung dieser Aufgabe wird mit einem Verfahren gemäß dem Anspruch 1 erzielt.

Die gemäß dem erfindungsgemäßen Verfahren erzeugte Torusströmung hat eine hohe, in Umfangsrichtung des Brennraums gerichtete Drallkomponente, da die Drallenergie bzw. die tangentiale Komponente der in dem Brennraum einströmenden Quetschströmung unmittelbar durch die Aufwärtsbewegung des Kolbens und vor allem während des Endes der Kompressionsphase erzeugt wird. Durch die hohe kinetische Energie der Torusströmung, insbesondere deren Bewegungsenergie in Umfangsrichtung des Brennraums, wird eine ausgezeichnete Aufbereitung des in die Torusströmung gelangenden Kraftstoffes erzielt, was wiederum zu einer vollständigen Verbrennung mit thermodynamisch gutem Wirkungsgrad führt.

Die abhängigen Ansprüche 2 und 3 sind auf vorteilhafte Durchführungsformen und Weiterbildungen des erfindungsgemäßen Verfahrens gerichtet.

Eine weitere Lösung der Erfindungsaufgabe wird mit einer Kolben-Zylindereinheit gemäß dem Anspruch 4 erzielt, in dessen Kennzeichen die geometrisch-konstruktiven Merkmale angegeben sind, mit denen die Vorteile des erfindungsgemäßen Verfahren erzielt werden.

Die abhängigen Ansprüche 5 bis 14 sind auf vorteilhafte Ausgestaltungen und Weiterbildungen der erfindungsgemäßen Kolben-Zylindereinheit gerichtet. Zur Vermeidung von Wiederholungen wird bezüglich der mit den Merkmalen dieser Ansprüche erzielten Vorteile auf die Beschreibung verwiesen.

Die Erfindung wird im Folgenden anhand schematischer Zeichnungen beispielsweise und mit weiteren Einzelheiten erläutert.

In den Zeichnungen stellen dar:
- Fig. 1: einen Schnitt durch eine Doppelzylindereinheit eines Doppelkolbenmotors,
- Fig. 2: eine schematische Ansicht von unten des Zylinderkopfes der Doppelkolbeneinheit gemäß Fig. 1,
- Fig. 3: eine der Fig. 2 ähnliche Ansicht einer abgeänderten Ausführungsform,
- Fig. 4: eine perspektivische Ansicht einer Torusströmung,
- Fig. 5 bis 7: Schnittansichten zur Erläuterung der Erzeugung einer Torusströmung in einer Kol- ben-Zylindereinheit mit einem Kolben,
- Fig. 8: einen Schnitt durch einen Kolben zur Erzeugung einer Torusströmung, und
- Fig. 9: eine Aufsicht auf den Kolben gem. Fig. 8.

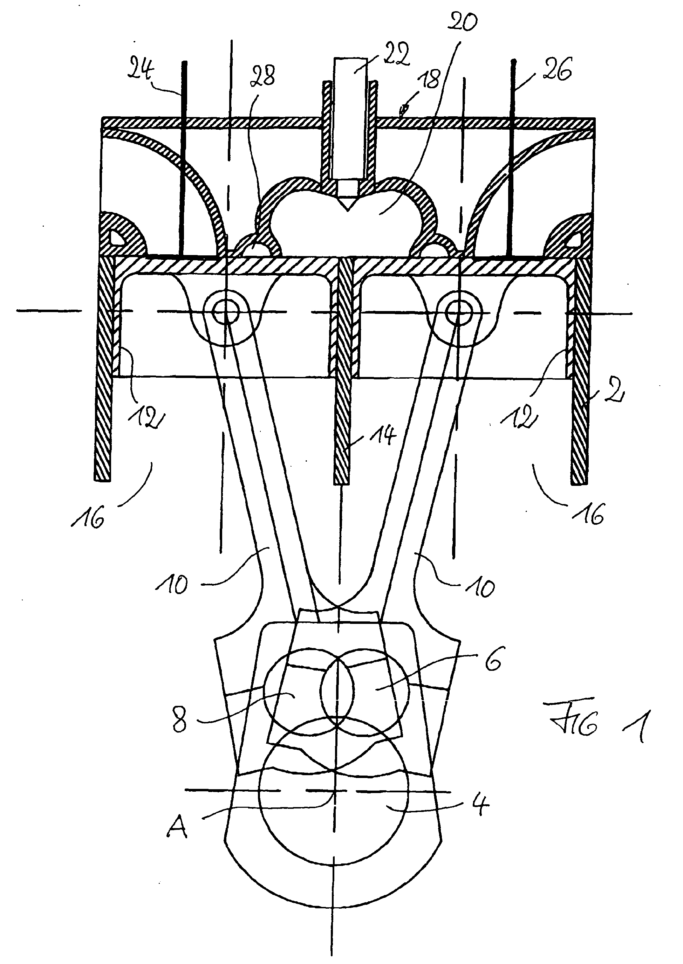

Gem. Fig. 1 weist ein Doppelkolbenmotor ein Motorgehäuse 2 auf, in dem eine Kurbelwelle 4 um eine Achse A drehbar gelagert ist. Die Kurbelwelle weist eine Kurbel mit geteiltem Kurbelzapfen, d.h. zwei versetzten Kurbelzapfen 6 und 8 auf, an denen je ein Pleuel 10 gelagert ist. Jedes Pleuel 10 ist an einem Kolben 12 gelagert. Die Kolben 12 sind in an eine gemeinsame Wand 14 angrenzenden Zylindern 16 auf- und abwärts beweglich. Durch die Teilung der Kurbel der Kurbelwelle in die beiden Kurbelzapfen 6 und 8 wird erreicht, dass sich die beiden Kolben 12 synchron auf- und abwärts bewegen, insbesondere ihren dargestellten oberen Totpunkt gleichzeitig erreichen.

Den beiden Zylindern 16 ist ein gemeinsamer Brennraum zugeordnet. Im oberen Totpunkt der Kolben 12 ist der Brennraum im wesentlichen nur durch eine im Zylinderkopf 18 ausgebildete, im dargestellten Längsschnitt insgesamt ω-förmige Brennraummulde 20 gebildet, in der mittig eine Einspritzdüse 22 angeordnet ist. Wie aus Fig. 1 weiter ersichtlich, ist der Zylinderkopf 18 außerhalb der Brennraummulde 20 derart gestaltet, dass im oberen Totpunkt der Kolben allenfalls ein Zwischenraum in Gestalt einer flachen Scheibe vorhanden ist, so dass ausgeprägte Quetschflächen vorhanden sind, in deren Bereich ein oder mehrere Einlassventile 24 und Auslassventile 26 angeordnet sind.

Ein solcher Doppelkolbenmotor, bei dem jeweils zwei Kolben einen gemeinsamen Brennraum haben und der in Achsenrichtung der Kurbelwelle mehrere hintereinander angeordnete Doppelkolben-Zylindereinheiten haben kann, hat gegenüber einem konventionellen Motor mit jeweils einer Kolben-Zylindereinheit mit einem Brennraum zahlreiche Vorteile, auf die im Einzelnen hier nicht eingegangen werden soll.

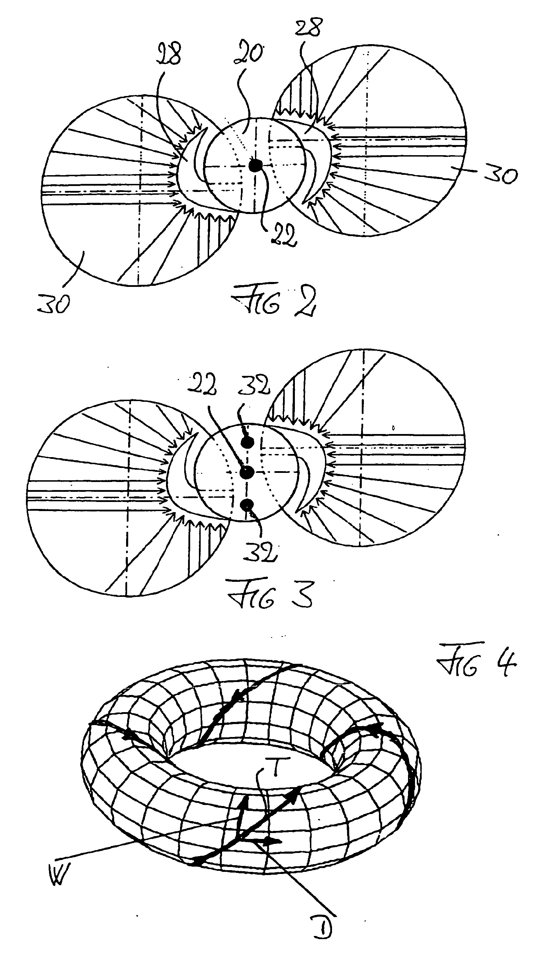

Wie aus der Fig. 1 ersichtlich, bestehen außerhalb der insgesamt rotationssymmetrisch um eine zur Zylinderachse parallele Achse ausgebildeten Brennraummulde 20 große Quetschflächen, die zur Erzeugung einer intensiven Ladungsbewegung innerhalb der Brennraummulde 20 genutzt werden können. Dazu sind im Zylinderkopf 18 von der Brennraummulde 20 ausgehend Ausnehmungen 28 ausgebildet, die im dargestellten Beispiel etwa halbkreisförmigen Querschnitt haben und deren Form aus den Fig. 2 und 3 ersichtlich ist, die eine Ansicht von unten auf den Zylinderkopf 18 unter Weglassung der Ventile 24 und 26 zeigen.

Wie dargestellt, haben die Ausnehmungen 28 etwa sichelförmige Gestalt, wobei die Sichelbreite und die Tiefe der Sichel von der Brennraummulde 20 aus mit zunehmender Entfernung von der Brennraummulde abnimmt. Die von der Brennraummulde abgewandte Begrenzungslinie der sichelförmigen Ausnehmungen 28 geht etwa tangential von der Brennraummulde 20 aus. Ihr radialer Abstand von der Brennraummulde nimmt dann zu und nimmt vorzugsweise zum spitzen Ende der Sichel hin wieder ab. Wie dargestellt, sind die sichelförmigen Ausnehmungen 28 gleichsinnig und mit gleichem gegenseitigem Umfangsabstand um die Brennraummulde 20 herum angeordnet. Die Anzahl der Sicheln kann zwischen 1 und 8 betragen. Bevorzugt liegt sie zwischen 2 und 4.

Bevorzugt haben die Ausnehmungen 28 nicht, wie in Fig. 1 dargestellt, einen halbkreisförmigen Querschnitt, sondern haben den Querschnitt von Kreissegmenten mit einem Umfangswinkel von mehr als 180°. Wie aus den Fig. 2 und 3 ersichtlich, nimmt der Querschnittsradius mit zunehmender Entfernung von der Brennraummulde ab. Die Tiefe der bevorzugt in einer Spitze endenden sichelförmigen Ausnehmung 28 nimmt zur Brennraummulde hin zu und beträgt bevorzugt im Bereich der Mündung der Ausnehmungen 28 in die Brennraummulde 20 etwa 50% der Tiefe der Brennraummulde. Die ω-Form der Brennraummulde 20 (Fig. 1) kann mehr oder weniger ausgeprägt sein. Insgesamt ist die Brennraummulde vorteilhaft aus übereinander angeordneten Kreisscheiben (und bei konvexem Boden Kreisringen) mit ggf. unterschiedlichen Radien zusammengesetzt.

Wie aus Fig. 2 ersichtlich, sind die über den Kolben 12 (Fig. 1) außerhalb der Brennraummulde 20 und der Ausnehmungen 28 ausgebildeten Quetschflächen 30 wegen der geteilten Kurbelzapfen in axialer Richtung der Kurbelwelle zueinander um die Länge eines der geteilten Kurbelzapfen versetzt. Dieser Versatz ist bei anders gestalteter Kurbelwelle nicht zwingend. Mit der beschriebenen Ausbildung der Doppelzylindereinheit wird folgendes erreicht:

Der Motor arbeitet beispielsweise konventionell nach einem Viertaktverfahren, d.h. an einen Ansaughub der Kolben schließt sich ein Kompressionshub an. Während des Kompressionshubs bewegen sich die Kolben 12 aufwärts, so dass aus dem bzw. den Einlasskanälen angesaugte Frischluft (oder Frischladung) zusammen mit verbliebenem Restgas aus den Quetschspalten 30 zunehmend verdrängt wird und eine durch die Pfeile der Fig. 2 dargestellte Strömung entsteht, die bevorzugt etwa rechtwinklig zu der äußeren Begrenzung der Ausnehmungen 28 in die Ausnehmungen einströmt, dort umgelenkt wird und aus den Ausnehmungen 28 tangential in die Brennraummulde 20 einströmt.

In Fig. 4 ist die tangentiale bzw. die in Umfangsrichtung der Brennraummulde 20 strömende Komponente der aus den Ausnehmungen 28 in die Brennraummulde 20 einströmenden Strömung mit D (Drallströmung) bezeichnet. In Folge der Einströmung der Quetschströmung aus den Quetschspalten über die äußere Begrenzung der Ausnehmungen 28 hat die in die Brennraummulde 20 einströmende Strömung zusätzlich eine Walzenkomponente W, die senkrecht auf der Drallkomponente D steht und insgesamt jeweils in einer radialen Mittelebene der Brennraummulde 20 erfolgt. Durch Überlagerung der Drallkomponente D, die zu einer um die Brennraummulde 20 umlaufenden Ringströmung bzw. walzenlosen Torusströmung führt, mit der Drallkomponente D entsteht eine insgesamt schraubenförmig um die Brennraummulde 20 umlaufende Torusströmung T. Diese Torusströmung T, deren Komponenten von der Gestaltung der Ausnehmungen 28 abhängen, kann hohe kinetische Energie besitzen und dadurch wesentlich zu einer Homogenisierung des Gemisches dienen, das zunächst von aus der Einspritzdüse 22 abgespritztem Kraftstoff entsteht. Die Torusströmung besitzt ihre maximale Energie genau zu dem für die Gemischaufbereitung wichtigsten Zeitpunkt, nämlich im Bereich des oberen Totpunktes der Kolben. Die Einspritzdüse 22 ist vorteilhafterweise im Zentrum der Brennraummulde 20 angeordnet und spritzt Kraftstoff vorteilhafterweise annähernd senkrecht zur Achse der Brennraummulde 20 und annähernd senkrecht zur Drallkomponente D.

Mit Hilfe der Kraftstoffaufbereitung in der Torusströmung wird eine schnelle und intensive Verwehung des Kraftstoffes erreicht, die zu einer guten Aufbereitung und Homogenisierung des Luft-Kraftstoffgemisches im Brennraum führt. Diese sehr gute Gemischaufbereitung erfolgt im Bereich des oberen Totpunktes des Kolbens, also etwa zu dem Zeitpunkt, zu dem ein Dieselmotor selbst zündet oder ein Ottomotor fremdgezündet wird. Einlass-Drallkanäle oder Einlass-Tumblekanäle, die wegen der damit verbundenen Strömungsverluste mit Füllungsverschlechterungen verbunden sind, können vollständig entfallen. Der Kraftstoff wird nach Austritt aus den Spritzlöchern der Einspritzdüse zuverlässig auseinander- bzw. aufgerissen und, insbesondere mittels aerodynamischer Wechselwirkungen zwischen dem Strahl und der Luft bzw. dem Gas, fein in der gesamten Brennraummulde verteilt, wodurch Einspritzdrücke gesenkt werden können, was energetisch und aus Kostengründen vorteilhaft ist. Für Otto- und Dieselmotoren können ähnliche Konfigurationen verwendet werden, wobei bei einem Ottomotor die Einspritzdüse, wie in Fig. 3 dargestellt, vorteilhafterweise ebenfalls in der Mitte der Brennraummulde 20 angeordnet sind und Zündkerzen 32 derart angeordnet sind, dass ihre Elektroden in die Torusströmung einragen.

Eine Torusströmung kann nicht nur in dem geschilderten Doppelkolbenmotor erzeugt werden, der wegen seiner geometrischen Verhältnisse diesbezüglich allerdings besonders vorteilhaft ist.

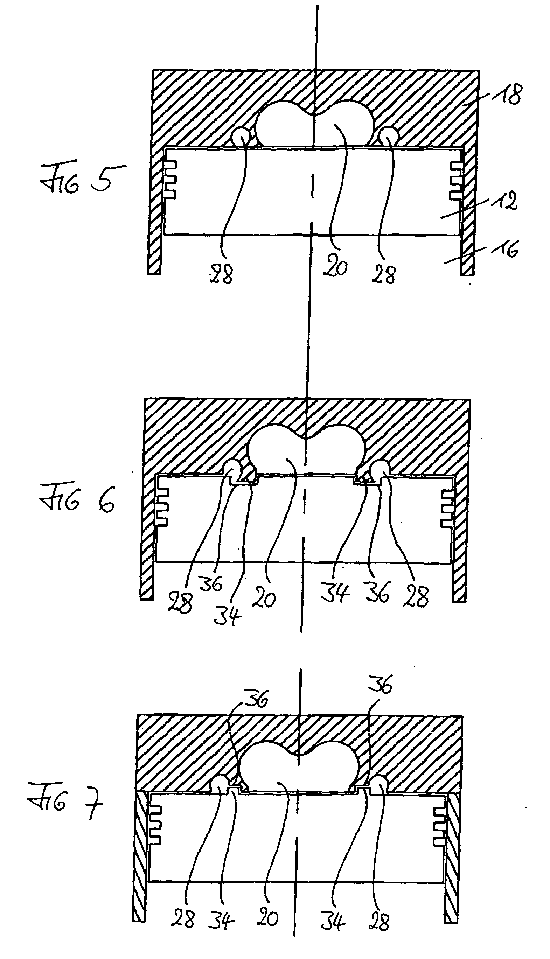

Fig. 5 zeigt schematisch einen Schnitt durch eine Kolben-Zylindereinheit mit einem einzelnen Kolben 12, der in einem Zylinder 16 arbeitet, und dem eine im Zylinderkopf 18 angeordnete Brennraummulde 20 mit sichelförmigen Ausnehmungen 28 zugeordnet ist.

Die Funktion der Anordnung gem. Fig. 5 entspricht der der Fig. 2 und 3 mit dem Unterschied, dass die außerhalb der Brennraummulde 20 und der Ausnehmungen 28 vorhandenen Quetschflächen kleiner sind, da sie nur durch die restliche Fläche des Kolbens 12 gegeben sind. Des weiteren steht bei der Ausführungsform gem. Fig. 5 für die nicht dargestellten Ventile gegenüber der Fig. 2 eine deutlich kleinere Fläche zur Verfügung.

Fig. 6 zeigt eine der Fig. 5 ähnliche Anordnung, bei der der Zylinderkopf 18 im Bereich zwischen der Brennraummulde 20 und den sichelförmigen Ausnehmungen 28 mit Vorsprüngen 30 ausgebildet ist, denen im Kolben 12 ausgebildete Vertiefungen 36 entsprechen. Mit den Vorsprüngen 34 und Vertiefungen 36 wird erreicht, dass bei Annäherung des Kolbens 12 an den oberen Totpunkt der Durchströmquerschnitt, der der von dem Quetschspalt in die Ausnehmungen 28 strömenden Strömung zur Verfügung steht, größer ist als der Querschnitt, der der aus der Ausnehmung 28 direkt in die Brennraummulde 20 (und nicht längs der Ausnehmung 28) strömenden Strömung zur Verfügung steht, so dass die Umsetzung der Quetschströmung in eine aus den Ausnehmungen 28 in die Brennraummulde 20 eintretende Torusströmung und insbesondere deren Walzenkomponente verbessert ist.

Die Ausführungsform gem. Fig. 6 entspricht der der Fig. 7 mit dem Unterschied, dass die Vorsprünge 34 am Kolben 12 und die Vertiefungen 36 im Zylinderkopf 18 ausgebildet sind. Die Funktion der Anordnung gem. Fig. 7 entspricht der der Fig. 6.

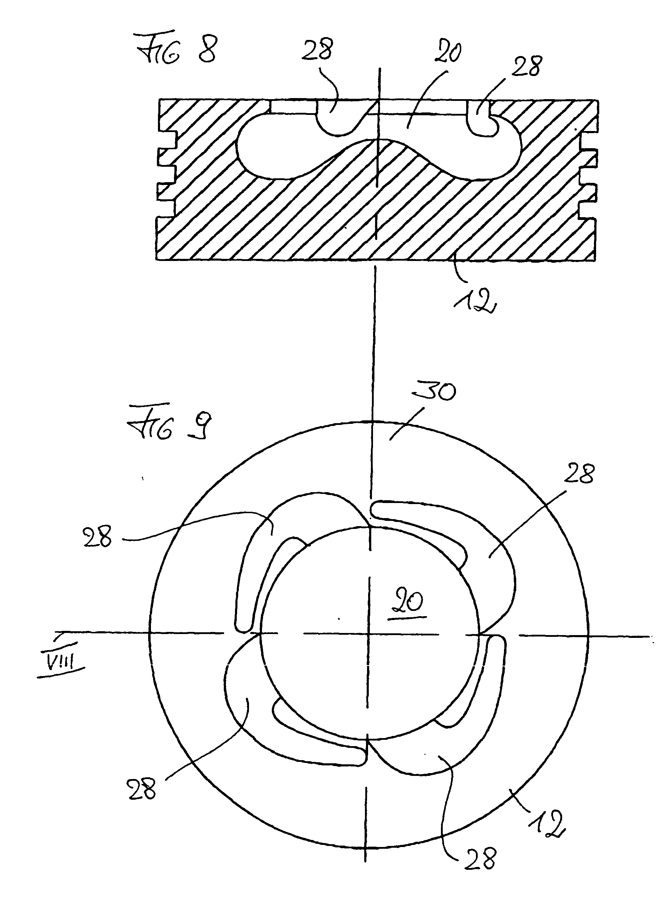

Fig. 8 zeigt einen Querschnitt durch einen Kolben 12, geschnitten in der Ebene VIII-VIII der Fig. 9, die eine Aufsicht auf den Kolben gem. Fig. 8 zeigt.

Bei dem Kolben 12 gem. Fig. 8 und 9 ist die Brennraummulde 20 nicht wie bei der Ausführungsform gem. Fig. 5 im Zylinderkopf sondern im Kolben ausgebildet. Die insgesamt sichelförmigen Ausnehmungen 28 sind ebenfalls im Kolben ausgebildet, wobei im Gegensatz zur Ausführungsform gem. Fig. 5 vier sichelförmige Ausnehmungen 28 vorgesehen sind, die sich von der Ausführungsform gem. Fig. 2 dadurch unterscheiden, dass sie nicht in Spitzen enden. Die Funktion des Kolbens gem. Fig. 8 und 9 entspricht der des Kolbens gem. Fig. 5, wobei die Torusströmung in der im Kolben ausgebildeten Brennraummulde 20 entsteht.

Die anhand der vorstehenden Ausführungsformen geschilderte Erfindung kann in vielfältiger Weise abgeändert werden. Beispielsweise kann der Brennraum bzw. die Brennraummulde im Falle einer Kolbenzylindereinheit mit einem Kolben den Kolben seitlich überlappend im Zylinderkopf ausgebildet sein und eine sichelförmige Ausnehmung im Kolben und/oder der Stirnwand des Zylinders ausgebildet sein. Es ergibt sich dann in Aufsicht ein Bild ähnlich der Fig. 2, wobei der dem rechten oder linken Kolben entsprechende Kreis fehlt.

Es ist auch möglich, den Brennraum bzw. die Brennraummulde im Kolben oder Zylinderkopf auszubilden, und die sichelförmigen Ausnehmungen im Zylinderkopf oder dem Kolben auszubilden. Der Querschnitt der sichelförmigen Ausnehmungen muss nicht zwingend kreissegmentartig sein, er kann auch U-förmig oder sonst wie gestaltet sein, solange er die Ausbildung einer Torusströmung, vorteilhaft schraubenförmige Torusströmung, begünstigt.

Der Kraftstoff kann in die Torusströmung sowohl senkrecht zu deren Drallkomponente, als auch in Richtung der Drallkomponente oder entgegen der Drallkomponente eingespritzt werden. Es können mehrere Kraftstoffeinspritzdüsen unmittelbar im Bereich der Torusströmung angeordnet sein, wodurch ein besonders intensives Verwehen des Kraftstoffs erzielt wird.

Merkmale der vorbeschriebenen unterschiedlichen Ausführungsformen können in unterschiedlicher Weise miteinander kombiniert werden.

Die Erfindung eignet sich zur Anwendung in allen Arten von Hubkolbenbrennkraftmaschinen.

### Bezugszeichenliste

- 2: Motorgehäuse
- 4: Kurbelwelle
- 6: Kurbelzapfen
- 8: Kurbelzapfen
- 10: Pleuel
- 12: Kolben
- 14: Wand
- 16: Zylinder
- 18: Zylinderkopf
- 20: Brennraummulde
- 22: Einspritzdüse
- 24: Einlassventil
- 26: Auslassventil
- 28: Ausnehmung
- 30: Quetschfläche
- 32: Zündkerze
- 34: Vorsprung
- 36: Vertiefung

## Patentansprüche

1. Verfahren zum Erzeugen eines brennfähigen Kraftstoff-Gasgemisches in einem Brennraum einer Hubkolbenbrennkraftmaschine, welcher Brennraum (20) bei in seinem oberen Totpunkt befindlichen Kolben (12) die Gestalt einer Mulde mit im Schnitt senkrecht zur Bewegungsrichtung des Kolbens etwa kreisförmigem Umfang hat, bei welchem Verfahren eine in einem insgesamt in Form einer ebenen Scheibe ausgebildeten Raum radial außerhalb des Brennraums zwischen der Oberfläche des Kolbens (12) und der Unterseite eines Zylinderkopfes (18) während des Kompressionshubs bei Annäherung des Kolbens an seinen oberen Totpunkt entstehende Quetschströmung mit einer tangentialen Komponente und einer radialen Komponente in den Brennraum einströmt, so dass im Brennraum eine längs dessen Umfang umlaufende Torusströmung (T) mit einer in Umfangsrichtung des Brennraums gerichteten Drallkomponente (D) und einer dazu senkrechten Walzenkomponente entsteht und so dass die Volumenelemente der Torusströmung den Brennraum insgesamt schraubförmig umströmen
**dadurch gekennzeichnet, dass**
die tangentiale Komponente der in den Brennraum einströmenden Quetschströmung durch Ausrichtung der Quetschströmung bei Annäherung des Kolbens an seinen oberen Totpunkt erfolgt.

2. Verfahren nach Anspruch 1 **dadurch gekennzeichnet, dass** mehrere, längs des Umfangs des Brennraums (20) beabstandete Einströmungen mit tangentialer Komponente der Quetschströmung erfolgen.

3. Verfahren nach einem der Ansprüche 1 oder 2 **dadurch gekennzeichnet, dass** in die Torusströmung annähernd von deren Zentrum her, annähernd senkrecht zu einer zentralen Achse des insgesamt muldenförmigen Brennraums (20) und annähernd senkrecht zum Drall Kraftstoff eingespritzt wird.

4. Kolben-Zylindereinheit zum Durchführen des Verfahrens nach Anspruch 1, enthaltend einen Kolben (2), dessen Oberseite zumindest in einem Teilbereich als eine insgesamt ebene Quetschfläche (30) ausgebildet ist, die sich im oberen Totpunkt des Kolbens an eine insgesamt eben als Quetschfläche (30) ausgebildete Unterseite eines Zylinderkopfes annähert, und einen in der Stirnwand des Zylinders (16) und/oder dem Kolben (12) und/oder der Unterseite des Zylinderkopfes (18) ausgebildeten Brennraum (20), der bei in seinem oberen Totpunkt befindlichen Kolben die Gestalt einer Mulde mit im Schnitt senkrecht zur Bewegungsrichtung des Kolbens etwa kreisförmigem Querschnitt hat und seitlich an einen zwischen den Quetschflächen ausgebildeten Quetschspalt angrenzt,
**dadurch gekennzeichnet, dass**
in wenigstens einer der Quetschflächen wenigstens eine vom Umfang des Brennraums (20) in Umfangsrichtung und radial auswärts ausgehende, im Schnitt senkrecht zur Kolbenbewegungsrichtung insgesamt sichelförmige Ausnehmung (28) ausgebildet ist, deren Querschnittsfläche in ihrer Längsrichtung mit zunehmender Entfernung vom Brennraum abnimmt, wobei die vom Brennraum (20) abgewandte Begrenzungslinie der sichelförmigen Ausnehmung (28) tangential vom Brennraumrand ausgeht, ihr radialer Abstand vom Brennraum zunächst zunimmt und zum spitzen Ende der Sichel hin wieder abnimmt, so dass die über die vom Brennraum abgewandte Begrenzungslinie in die Ausnehmung einströmende Quetschströmung etwa senkrecht zur Begrenzungslinie einströmt.

5. Kolben-Zylindereinheit nach Anspruch 4 **dadurch gekennzeichnet, dass** der Rand der Ausnehmung (28) derart ausgebildet ist, dass bei Annäherung des Kolbens (12) an seinen oberen Totpunkt ein Durchströmquerschnitt für eine über einen vom Brennraum (20) abgewandten Rand der Ausnehmung in die Ausnehmung strömende Strömung größer ist als ein Durchströmquerschnitt für eine Strömung aus der Ausnehmung über deren brennraumseitigen Rand zum Brennraum.

6. Kolben-Zylindereinheit nach Anspruch 4 oder 5 **dadurch gekennzeichnet, dass** die Querschnitte der Ausnehmung (28) Kreissegmente mit einem Umfangswinkel größer 180° und zum Brennraum hin zunehmendem Radius sind.

7. Kolben-Zylindereinheit nach einem der Ansprüche 4 bis 6 **dadurch gekennzeichnet, dass** die Tiefe der sichelförmigen Ausnehmung (28) im Bereich von deren Mündung in den Brennraum etwa 50% der Brennraumtiefe beträgt.

8. Kolben-Zylindereinheit nach einem der Ansprüche 4 bis 7 **dadurch gekennzeichnet, dass** der Brennraum (20) im Querschnitt die Gestalt eines leicht geschlossenen ω hat.

9. Kolben-Zylindereinheit nach einem der Ansprüche 4 bis 8 **dadurch gekennzeichnet, dass** der Brennraum (20) als Mulde zumindest teilweise in einem Kolben (12) und/oder einem Zylinderkopf (18) ausgebildet ist und um den Brennraum herum mehrere sichelförmige Ausnehmungen (28) zumindest teilweise im Kolben und/oder dem Zylinderkopf (18) ausgebildet sind.

10. Kolben-Zylindereinheit nach einem der Ansprüche 4 bis 8 **dadurch gekennzeichnet, dass** der Brennraum (20) den Kolben (12) seitlich überlappend in der Stirnwand des Zylinders (16) oder im Zylinderkopf (18) ausgebildet ist und im Kolben und/oder der Stirnwand des Zylinders und/oder im Zylinderkopf eine sichelförmige Ausnehmung ausgebildet ist.

11. Kolben-Zylindereinheit nach einem der Ansprüche 4 bis 8 **dadurch gekennzeichnet, dass** der Brennraum in einem zwei Zylinder (16, 16) überlappenden Bereich eines Zylinderkopfes (18) ausgebildet ist, in welchen Zylindern je einer von sich gemeinsam bewegenden Kolben (12, 12) arbeitet, in denen und/oder dem entsprechenden Bereich des Zylinderkopfes wenigstens eine sichelförmige Ausnehmung (28) ausgebildet ist.

12. Kolben-Zylindereinheit nach einem der Ansprüche 4 bis 11 **dadurch gekennzeichnet, dass** in dem Brennraum annähernd mittig eine Kraftstoffeinspritzdüse (22) angeordnet ist, mit der Kraftstoff in die sich ausbildende Torusströmung (T) einspritzbar ist.

13. Kolben-Zylindereinheit nach einem der Ansprüche 4 bis 11 **dadurch gekennzeichnet, dass** in dem Brennraum (20) wenigstens eine in die sich ausbildende Torusströmung einragende Zündkerzenelektrode angeordnet ist.

14. Kolben-Zylindereinheit nach Anspruch 13 **dadurch gekennzeichnet, dass** die Zündkerzenelektrode im Abstand von 1/3 bis 2/3 des Brennraumradius von der Mitte des Brennraums (20) entfernt angeordnet ist.

## Claims

1. A method for generating a combustible fuel-gas-mixture in a combustion chamber of a reciprocating piston combustion engine, said combustion chamber (20) having the form of a cavity with an approximately circular circumference in a section perpendicular to the moving direction of the piston when the piston is in its top dead centre, in which method a quench flow generated in a space located radially outside the combustion chamber between the upper surface of the piston (12) and the lower side of a cylinder head (18) and having the form of a planar disc flows into the combustion chamber with a tangential component and a radial component during the compression stroke when the piston approaches its top dead centre, so that a torus flow (T) circulating along the circumference of the combustion chamber and having a swirl component (D) in a circumferential direction of the combustion chamber and a roll component that is perpendicular thereto, is generated in the combustion chamber so that the volume elements of the torus flow circulate around the combustion chamber in a substantially helical manner,
**characterized in that**
the tangential component of the quench flow streaming into the combustion chamber is generated by orienting the quench flow when the piston approaches its top dead centre.

2. The method according to claim 1, **characterized in that** plural inflows of the quench flow with a tangential component occur, said inflows being spaced in a circumferential direction of the combustion chamber (20).

3. The method according to one of claims 1 or 2, **characterized in that** fuel is injected into the torus flow approximately from its centre, approximately perpendicular to a central axis of the substantially recess-shaped combustion chamber (20), and approximately perpendicular to its swirl.

4. A piston-cylinder-unit for implementing the method according to claim 1, comprising a piston (2) whose upper side is, at least partially, formed as a substantially planar quench area (30), which quench area, when the piston is in its top dead centre, approaches a lower side of a cylinder head, formed as a substantially planar quench area (30), and further comprising a combustion chamber (20) formed in the end wall of the cylinder (16) and/or the piston (12) and/or the lower side of the cylinder head (18), said combustion chamber having the form of a cavity with a substantially circular circumference in a cross section perpendicular to the moving direction of the piston, and laterally adjoining to a quench gap formed between the quench areas, when the piston is in its top dead centre,
**characterized in that**
at least one recess (28), which is substantially sickle-shaped in its cross section perpendicular to the moving direction of the piston, is formed in at least one of the quench areas and extends in circumferential direction of and radially outward from the circumference of the combustion chamber (20), wherein the cross sectional area of the recess decreases in its longitudinal direction with increasing distance from the combustion chamber, and wherein the boundary line of the sickle-shaped recess (28), which boundary line is remote from the combustion chamber (20), extends tangentially from the edge of the combustion chamber, and wherein its radial distance from the combustion chamber first increases and then again decreases towards the acute end of the sickle, so that the quench flow streaming into the recess via the boundary line that is remote from the combustion chamber streams in substantially perpendicular to the boundary line.

5. The piston-cylinder-unit according to claim 4, **characterized in that** the edge of the recess (28) is formed such that, when the piston (12) approaches its top dead centre, a flow through cross section of a flow streaming into the recess via an edge of the recess that is remote from the combustion chamber is larger than a flow through cross section of a flow that streams out of the recess forwards the combustion chamber via the edge of the recess that is close to the combustion chamber.

6. The piston-cylinder-unit according to claim 4 or 5, **characterized in that** the cross sections of the recess (28) are segments of a circle, with a circumferential angle larger than 180° and a radius that is increasing in the direction towards the combustion chamber.

7. The piston-cylinder-unit according to one of claims 4 to 6, **characterized in that** the depth of the sickle-shaped recess (28) in the area of its opening to the combustion chamber is about 50% the depth of the combustion chamber.

8. The piston-cylinder-unit according to one of claims 4 to 7, **characterized in that** the combustion chamber (20) has the form of a slightly closed ω in its cross section.

9. The piston-cylinder-unit according to one of claims 4 to 8, **characterized in that** the combustion chamber (20) is a cavity, formed at least partially in a piston (12) and/or a cylinder head (18), and that plural sickle-shaped recesses (28) are formed around the combustion chamber, at least partially in the piston and/or the cylinder head (18).

10. The piston-cylinder-unit according to one of claims 4 to 8, **characterized in that** the combustion chamber (20) is formed in the end wall of the cylinder (16) or in the cylinder head (18) so as to laterally overlap the piston (12), and that a sickle-shaped recess is formed in the piston and/or the end wall of the cylinder and/or the cylinder head.

11. The piston-cylinder-unit according to one of claims 4 to 8, **characterized in that** the combustion chamber is formed in a portion of a cylinder head (18), which portion overlaps two cylinders (16, 16), in which cylinders a respective one of jointly moving pistons (12, 12) is operating, at least one sickle-shaped recess (28) being formed in said pistons and/or in the respective portion of the cylinder head.

12. The piston-cylinder-unit according to one of claims 4 to 11, **characterized in that** a fuel injection nozzle (22) is arranged substantially centrally in the combustion chamber, allowing for an injection of fuel into the forming torus flow.

13. The piston-cylinder-unit according to one of claims 4 to 11, **characterized in that** at least one spark plug electrode protruding into the forming torus flow is arranged in the combustion chamber (20).

14. The piston-cylinder-unit according to claim 13, **characterized in that** the spark plug electrode is arranged spaced apart from the centre of the combustion chamber at a distance of 1/3 to 2/3 of the combustion chamber radius.

## Revendications

1. Procédé pour générer un mélange de carburant-gaz combustible dans une chambre de combustion d'un moteur alternatif à combustion interne, laquelle chambre de combustion (20), lorsque le piston (12) se trouve à son point mort haut, a la forme d'une auge ayant une circonférence approximativement circulaire en coupe, perpendiculairement à la direction de mouvement du piston, procédé dans lequel un flux sous compression se produisant dans un espace, se présentant dans l'ensemble sous la forme d'un disque plan, radialement à l'extérieur de la chambre de combustion entre la surface du piston (12) et la face inférieure d'une tête de cylindre (18) pendant la course de compression, lorsque le piston se rapproche de son point mort haut, est admis dans la chambre de combustion avec une composante tangentielle et une composante radiale, de sorte que, dans la chambre de combustion, il se produise un flux torique (T) circulant le long de sa circonférence et ayant une composante de torsion (D) dirigée dans la direction circonférentielle de la chambre de combustion et une composante cylindrique perpendiculaire à celle-ci et que les éléments volumiques du flux torique circulent dans la chambre de combustion dans l'ensemble en forme hélicoïdale,
**caractérisé en ce que**
la composante tangentielle du flux sous compression admis dans la chambre de combustion résulte de l'orientation du flux sous compression lorsque le piston s'approche de son point mort haut.

2. Procédé selon la revendication 1, **caractérisé en ce qu'**il se produit plusieurs admissions espacées sur la circonférence de la chambre de combustion (20) avec une composante tangentielle du flux sous compression.

3. Procédé selon l'une quelconque des revendications 1 ou 2, **caractérisé en ce que** du carburant est injecté dans le flux torique approximativement depuis son centre, approximativement perpendiculairement à un axe central de la chambre de combustion (20) dans l'ensemble en forme d'auge et approximativement perpendiculairement à la torsion.

4. Unité de cylindre et piston pour réaliser le procédé selon la revendication 1, contenant un piston (2), dont la face supérieure se présente au moins dans une zone partielle sous la forme d'une surface de compression (30) dans l'ensemble plane, qui s'approche au niveau du point mort haut du piston sur une face inférieure, dans l'ensemble plane et conformée en surface de compression (30), d'une tête de cylindre et une chambre de combustion (20) formée dans la paroi frontale du cylindre (16) et/ou dans le piston (12) et/ou dans la face inférieure de la tête de cylindre (18), qui, lorsque le piston se trouve à son point mort haut, a la forme d'une auge avec une section transversale approximativement circulaire en coupe perpendiculairement à la direction de mouvement et est latéralement contiguë à une fente de compression formée entre les surfaces de compression, **caractérisée en ce que**
dans au moins une des surfaces de compression, il est formé au moins un évidement (28) dans l'ensemble falciforme en coupe perpendiculairement à la direction de mouvement du piston et partant de la circonférence de la chambre de combustion (20) dans la direction circonférentielle et radialement vers l'extérieur, évidement dont la surface en coupe transversale diminue dans sa direction longitudinale à mesure que l'on s'éloigne de la chambre de combustion, dans lequel la ligne de délimitation, opposée à la chambre de combustion (20), de l'évidement falciforme (28), part tangentiellement du bord de la chambre de combustion, sa distance radiale depuis la chambre de combustion augmente d'abord et rediminue vers l'extrémité pointue de la faux, de sorte que le flux sous compression admis dans l'évidement via la ligne de délimitation opposée à la chambre de combustion est admis à peu près perpendiculairement à la ligne de délimitation.

5. Unité de cylindre et piston selon la revendication 4, **caractérisée en ce que** l'on forme le bord de l'évidement (28) de sorte que, lorsque le piston (12) s'approche de son point mort haut, une section transversale de passage pour un flux s'écoulant via un bord de l'évidement opposé à la chambre de combustion (20) dans l'évidement soit supérieure à une section transversale de passage pour un flux allant de l'évidement à la chambre de combustion par son bord côté chambre de combustion.

6. Unité de cylindre et piston selon la revendication 4 ou 5, **caractérisée en ce que** les sections transversales de l'évidement (28) sont des segments circulaires avec un angle circonférentiel supérieur à 180 ° et un rayon augmentant vers la chambre de combustion.

7. Unité de cylindre et piston selon l'une quelconque des revendications 4 à 6, **caractérisée en ce que** la profondeur de l'évidement falciforme (28) correspond, dans la zone de son embouchure dans la chambre de combustion, à environ 50 % de la profondeur de la chambre de combustion.

8. Unité de cylindre et piston selon l'une quelconque des revendications 4 à 7, **caractérisée en ce que** la chambre de combustion (20) a, en section transversale, la forme d'un ω légèrement fermé.

9. Unité de cylindre et piston selon l'une quelconque des revendications 4 à 8, **caractérisée en ce que** la chambre de combustion (20) se présente sous la forme d'une auge au moins partiellement dans un piston (12) et/ou dans une tête de cylindre (18) et plusieurs évidements falciformes (28) sont réalisés au moins partiellement dans le piston et/ou dans la tête de cylindre (18) autour de la chambre de combustion.

10. Unité de cylindre et piston selon l'une quelconque des revendications 4 à 8, **caractérisée en ce que** l'on réalise la chambre de combustion (20) par chevauchement latéral du piston (12) dans la paroi frontale du cylindre (16) ou dans la tête de cylindre (18) et **en ce que** l'on forme un évidement falciforme dans le piston et/ou la paroi frontale du cylindre et/ou dans la tête de cylindre.

11. Unité de cylindre et piston selon l'une quelconque des revendications 4 à 8, **caractérisée en ce que** l'on réalise la chambre de combustion dans une zone d'une tête de cylindre (18) chevauchant deux cylindres (16, 16), dans lesquels cylindres fonctionne respectivement un des pistons se déplaçant ensemble (12, 12), dans lesquels et/ou dans la zone correspondante de la tête de cylindre, on réalise au moins un évidement falciforme (28).

12. Unité de cylindre et piston selon l'une quelconque des revendications 4 à 11, **caractérisée en ce que**, dans la chambre de combustion, on aménage approximativement au centre un injecteur de carburant (22), à l'aide duquel le carburant peut être injecté dans le flux torique (T) qui se forme.

13. Unité de cylindre et piston selon l'une quelconque des revendications 4 à 11, **caractérisée en ce que**, dans là chambre de combustion (20), on aménage au moins une électrode de bougie d'allumage pénétrant dans le flux torique en cours de formation.

14. Unité de cylindre et piston selon la revendication 13, **caractérisée en ce que** l'électrode de bougie d'allumage est aménagée à une distance de 1/3 à 2/3 du rayon de chambre de combustion en s'éloignant du centre de la chambre de combustion (20).
